# EUROPEAN PATENT APPLICATION

(11) **EP 1 731 698 A1**
(43) Date of publication of application: **13.12.2006**
(21) Application number: 05727119.9
(22) Date of filing: 24.03.2005
(51) Int. Cl.: E05B 49/00, B60R 25/00, E05B 65/20, H04B 1/59

(54) **ON-VEHICLE RADIO DEVICE**

(30) Priority: 30.03.2004 JP 2004098666
(71) Applicant: AISIN SEIKI KABUSHIKI KAISHA, Kariya-shi, Aichi-ken 448-8650 (JP)
(72) Inventor: INABA, Hisashi, AISIN SEIKI KABUSHIKI KAISHA, Kariya-shi, Aichi 448-8650 (JP); ITO, Takeshi, AISIN SEIKI KABUSHIKI KAISHA, Kariya-shi, Aichi 448-8650 (JP)
(74) Representative: TBK-Patent
(86) International application number: PCT/JP2005/005340
(87) International publication number: WO 2005/098177

(57) **Abstract**

To provide an on-vehicle radio device that acquires identification information for unlocking a lock device of a vehicle from a portable radio device having the identification information recorded therein by radio communication with the portable radio device and is configured so that the radio communication can be achieved with higher reliability.

An on-vehicle radio device that acquires identification information for unlocking a lock device of a vehicle from a portable radio device having the identification information recorded therein by radio communication with the portable radio device, includes: variable frequency signal generating means P0, 21, 22; band changing means that changes a frequency band; radio transmitting means 18, 20 that transmits the signal generated by the variable frequency signal generating means to the outer space; and transmission characteristics changing means 25 that changes the transmission characteristics of the radio transmitting means to transmission characteristics adapted to the changed frequency band.

## Description

### Technical Field

The present invention relates to an on-vehicle radio device that acquires identification information for unlocking a lock device of a vehicle from a portable radio device having the identification information recorded therein by radio communication with the portable radio device.

### Background Art

As a system using this kind of on-vehicle radio device, for example, in the patent document 1, there is described a system having a transmitting antenna for transmitting a radio wave to the outside of a vehicle and a receiving antenna for receiving a radio wave from the outside of the vehicle. In this system, a request signal is transmitted from the transmitting antenna, a portable device receives the request signal and then transmits a response signal having an ID code inserted therein, and the response signal is received by the receiving antenna. Then, if the ID code is authenticated, the system carries out a control operation, such as unlocking of a door. The radio communication used in such a system typically uses a fixed frequency band that is previously set in an on-vehicle radio device and a portable radio device.

Patent document 1: Japanese Patent Application "kokai" No. 10-227161

### Disclosure of the Invention

### Problem to be solved by the invention

However, in using a radio communication system, the available band and the transmission power are restricted by the Radio Law or the like. Since the radio communication is highly convenient, many radio communication systems are used today in spite of such restrictions. As a result, the limited frequency band is shared by a plurality of radio communication systems. Accordingly, there is a problem that the frequency bands of different radio communication systems overlap, and an interference or crosstalk between the radio waves occurs.

Therefore, when radio communication is established between the on-vehicle radio device and the portable radio device having the identification information recorded therein for the on-vehicle radio device to acquire the identification information, the radio communication can be affected by external noise or a radio wave used by another radio communication system. As a result, there are possibilities that the quality of the radio communication can be deteriorated, the radio communication established to acquire the identification information cannot be normally completed, it can take long to complete the communication because attempts to establish the communication have to be made repeatedly, and, in the worst case, the communication cannot be established.

Thus, in view of the circumstances described above, an object of the present invention is to provide an on-vehicle radio device that acquires identification information for unlocking a lock device of a vehicle from a portable radio device having the identification information recorded therein by radio communication with the portable radio device and is configured so that the radio communication can be achieved with higher reliability.

### Means for solving problem

An on-vehicle radio device according to the present invention that acquires identification information for unlocking a lock device of a vehicle from a portable radio device having the identification information recorded therein by radio communication with the portable radio device is characterized by the configuration described below.
The on-vehicle radio device comprises: variable frequency signal generating means; band changing means of changing the frequency band of a signal generated by the variable frequency signal generating means; radio transmitting means of transmitting the signal generated by the variable frequency signal generating means to the outer space; and transmission characteristics changing means of changing the transmission characteristics of the radio transmitting means to transmission characteristics adapted to the frequency band of the signal generated by the variable frequency signal generating means changed by the band changing means.

With this characteristic configuration, the on-vehicle radio device comprises: variable frequency signal generating means; band changing means of changing the frequency band of a signal generated by the variable frequency signal generating means; radio transmitting means of transmitting the signal generated by the variable frequency signal generating means to the outer space; and transmission characteristics changing means of changing the transmission characteristics of the radio transmitting means to transmission characteristics adapted to the frequency band of the signal generated by the variable frequency signal generating means changed by the band changing means. Therefore, in the radio communication established between the portable radio device and the on-vehicle radio device, the frequency band of the transmission signal transmitted by the on-vehicle radio device can be changed.

Typically, if the frequency band of a signal is changed, the effect of the external radio wave environment on the signal (interference, crosstalk, deterioration or the like) is also changed. Therefore, if the frequency band of the transmission signal transmitted by the on-vehicle radio device is changed, the effect of the external radio wave environment on the signal transmitted by the on-vehicle radio device is also changed. In other words, by changing the frequency band of the signal transmitted by the on-vehicle radio device, the effect of the radio wave environment on the communication can be changed. Thus, in the case where a signal transmitted within a frequency band by the on-vehicle radio device is affected by the external radio wave environment, and the portable radio device cannot normally receive the signal, the probability that the portable radio device normally receives the signal transmitted by the on-vehicle radio device can be increased by changing the frequency band of the transmission signal transmitted by the on-vehicle radio device, so that the reliability of the radio communication between the on-vehicle radio device and the portable radio device can be improved.

It is preferred that the frequency band of a signal transmitted from the portable radio device to the on-vehicle radio device is set higher than the frequency of the signal transmitted from the on-vehicle radio device to the portable radio device.

In order to avoid crosstalk or the like, it is preferred that the portable radio device and the on-vehicle radio device use different frequency bands. The portable radio device according to the present invention has been used as a portable device for a switch-controlled radio wave type keyless entry system before used in the system according to the present invention. The keyless entry system referred to herein is a system that locks or unlocks a vehicle via infrared or radio-wave communication established by pressing a switch on the portable device. In the case of the radio wave type, the frequency band used is on the order of MHz. Therefore, if the band used by the portable device (portable radio device) is also on the order of MHz, the past design resources can be efficiently used. Here, if the band used by the on-vehicle radio device is set about 1000 times lower or higher than the band of the portable radio device, the band used by the on-vehicle radio device is on the order of kHz or GHz. If the GHz band is used, other communication devices, such as cellular phones, can be affected, so that the kHz band is preferably used. Thus, if the frequency bands are set as described above, high-quality communication can be established by preventing crosstalk or the like between the portable radio device and the on-vehicle radio device.

In addition, it is preferred that the variable frequency signal generating means generates the signal to be transmitted to the portable radio device based on discrete variable values of a sine function stored in a table.

For example, there is prepared a table containing discrete variable values of one cycle of a sine function that are stored at successive addresses in a data memory of the variable frequency signal generating means. Values in the table are extracted based on reference address values that are incremented by a configurable interval, thereby obtaining discrete periodic signals. By changing the configurable interval, any sine function having an arbitrary period can be obtained.

In addition, it is preferred that the variable frequency signal generating means generates a carrier wave based on discrete variable values of a sine function stored in a table and modulates a predetermined code with the carrier wave, thereby generating the signal to be transmitted to the portable radio device.

For example, a modulated wave can be generated that includes signals obtained by extracting discrete variable values in the table at the sampling timing as described above as a carrier wave and a code or the like to be transmitted to the portable radio device as a baseband signal. In this case, up to the generation of the modulated wave can be completed by a sequence of operations.

In addition, it is preferred that the band changing means has a digital filter that removes a frequency band that is not necessary for transmission to the portable radio device based on a predetermined coefficient and changes the coefficient in accordance with the changed frequency band of the signal generated by the variable frequency signal generating means.

The modulated wave generated as described above contains a component within the unnecessary band at the time of generation. Thus, it is preferred that the component within the unnecessary band is cut by digital filtering (using an FIR filter, for example). In this case, if the coefficient of the digital filter is changed in accordance with the frequency band of the signal generated by the variable frequency signal generating means, adequate matching can be achieved.

In addition, it is preferred that the on-vehicle radio device further comprises human detection means of detecting a person, the band changing means changes the frequency band of the signal generated by the variable frequency signal generating means in accordance with a detection signal of the human detection means, and the transmission characteristics changingmeans changes, in accordance with the detection signal of the human detection means, the transmission characteristics of the radio transmitting means to transmission characteristics adapted to the frequency band of the signal generated by the variable frequency signal generating means changed by the band changing means.

With this configuration, the frequency band of the signal generated by the variable frequency signal generating means is changed in accordance with the detection signal of the human detection means, and the transmission characteristics of the radio transmitting means is changed to transmission characteristics adapted to the changed frequency band. In order words, the frequency band of the signal transmitted by the on-vehicle radio device is changed in accordance with the detection signal of the human detection means. For example, if the communication between the portable radio device and the on-vehicle radio device is not completed when the human detection means detects a person, a communication failure is suspected. With the configuration described above, the frequency band of the signal transmitted by the on-vehicle radio device is changed in accordance with the detection signal of the human detection means. Thus, even if a failure has occurred in the communication using the prior frequency, it is possible to quickly recover from the communication failure when the person gets in the vehicle.

In addition, it is preferred that the band changing means is activated when the human detection means detects a person.

It is not possible to determine whether the portable radio device exists nearby only from the fact that the communication between the portable radio device and the on-vehicle radio device is not completed. In this state, if the frequency band of the signal transmitted by the on-vehicle radio device is frequently changed, the electric power of the vehicle is wasted when no portable radio device exists nearby. Thus, if the band changing means is activated when the human detection means detects a person as described above, such a waste of electric power can be avoided, and this is preferable.

That is, in the case where the on-vehicle radio device has not yet acquired the identification information recorded in the portable radio device when the person carrying the portable radio device having the identification information recorded therein is detected by the human detection means, the band changingmeans is activated. Then, within the changed frequency band, or in other words, under the condition where the effect of the external radio wave environment is changed, the on-vehicle radio device and the portable radio device communicate with each other. That is, the on-vehicle radio device transmits signals to the outer space using different frequency bands before and after the human detection means detects a person. Therefore, the probability that the portable radio device normally receives the signal transmitted by the on-vehicle radio device is increased, and the reliability of the radio communication between the on-vehicle radio device and the portable radio device is improved.

In addition, it is preferred that the on-vehicle radio device further comprises radio wave measuring means of measuring radio wave intensity in the outer space of the on-vehicle radio device for each of predetermined frequency bands, the band changing means changes the frequency band of the signal generated by the variable frequency signal generating means to one of the frequency bands for which the radio wave measuring means measures the lowest radio wave intensity, and the transmission characteristics changing means changes the transmission characteristics of the radio transmitting means to transmission characteristics adapted to the frequency band of the signal generated by the variable frequency signal generating means changed by the band changing means.

With this configuration, the frequency band of the signal generated by the variable frequency signal generating means is changed to one of the frequency bands for which the radio wave measuring means measures the lowest radio wave intensity, and the transmission characteristics of the radio transmitting means are changed to transmission characteristics adapted to the changed frequency band. Thus, the frequency band of the signal transmitted by the on-vehicle radio device is changed to a band in which the radio wave intensity in the outer space of the on-vehicle radio device is the lowest. Thus, since the on-vehicle radio device transmits a signal within a band in which the signal is least affected by the electromagnetic wave in the outer space of the on-vehicle radio device, the probability that the portable radio device normally receives the signal transmitted by the on-vehicle radio device is increased, and the reliability of the radio communication between the on-vehicle radio device and the portable radio device is improved.

In addition, it is preferred that the radio measuring means measures the radio wave intensity when the on-vehicle radio device is in a transmission wait state.

Typically, one component doubles as the transmitting antenna and the receiving antenna. Therefore, when in the transmission wait state, the antenna can be exclusively used for reception, so that radio wave intensity can be measured under good conditions to find a safe band, in which the effect of the electromagnetic wave in the outer space is minimized.

### Best Mode for Carrying Out the Invention

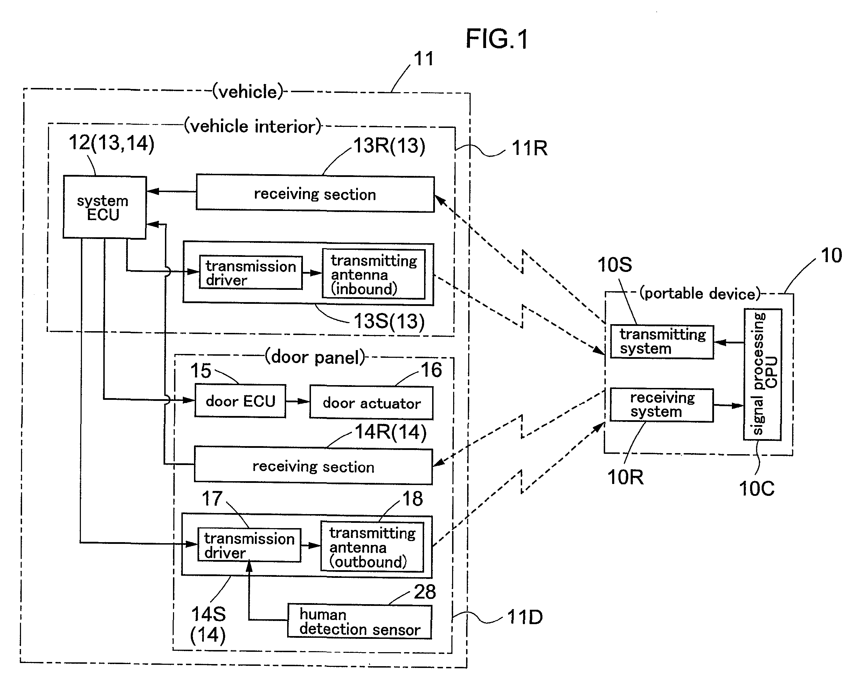

Figure 1 shows a configuration of a smart system, which is an on-vehicle radio device according to an embodiment of the present invention. When a user with a portable device 10 (corresponding to a portable radio device according to the present invention) approaches to a vehicle 11 having this smart system mounted thereon from the outside, the portable device 10 receives transmission request signals that are transmitted from the vehicle 11 at predetermined time intervals. In response to the transmission request signal, the portable device 10 transmits a response signal including identification information ID. Thus, the identification information ID is transmitted to the vehicle 11. A system control section (a system ECU 12 described later) mounted on the vehicle 11 checks the identification information ID against preset reference information. If the identification information ID matches with the reference information, a door lock of the vehicle 11 becomes able to be unlocked. Then, if the user puts a hand on an outside handle of a door panel 11D, the door lock is unlocked.

The radio communication between the vehicle 11 and the portable device 10 described above is a two-way communication including communications in two directions. In one direction, the vehicle 11 transmits a signal, such as the transmission request signal, and the portable device 10 receives the signal (the signal in this direction is referred to as "downstream signal" hereinafter). In the other direction, the portable device 10 transmits a signal, such as the response signal, and the vehicle 11 receives the signal (the signal in this direction is referred to as "upstream signal" hereinafter). According to this embodiment, the downstream signal is carried on a radio wave having a low frequency ranging approximately from 50 to 300 kHz, and the upstream signal is carried on a radio wave having a high frequency of about 300 MHz. However, the present invention is not limited to these frequency ranges. In addition, the present invention is not limited to the two-way communication that uses different frequency ranges for the upstream and downstream signals.

As shown in Figure 1, on the vehicle 11, there are mounted an inbound on-vehicle radio device 13 that mainly communicates by radio with the portable device 10 when the portable device 10 exists in the interior of the vehicle and an outbound on-vehicle radio device 14 that mainly communicates by radio with the portable device 10 when the portable device 10 exists out of the vehicle.

The inbound on-vehicle radio device 13 and the outbound on-vehicle radio device 14 have transmitting sections 13S and 14S and receiving sections 13R and 14R, respectively. The transmitting sections and the receiving sections are connected to the system ECU 12 and controlled by the system ECU 12 in association with each other. The transmitting section 13S, the receiving section 13R and the system ECU 12 controlling them constitute the inbound on-vehicle radio device 13. The transmitting section 14S, the receiving section 14R and the system ECU 12 controlling them constitute the outbound on-vehicle radio device 14. The system ECU 12 configures the settings of and controls each of the transmitting and receiving sections and controls a door actuator 16 via a door ECU 15 based on the identification information ID obtained by communication with the portable device 10, thereby switching the state of the door between a locked state and an unlocked state.

The inbound on-vehicle radio device 13 is used for preventing the so-called "lockout". For example, means of distinguishing between an occupied state in which any user exists in the vehicle interior 11R and an unoccupied state in which no user exists in the vehicle interior 11R is separately provided. If the inbound on-vehicle radio device 13 recognizes the presence of the portable device 10 in the vehicle interior 11R when in the unoccupied state, the door actuator 16 keeps the door in the unlocked state under the control of the system ECU 12. With such a configuration, even if the user gets off the vehicle leaving the portable device 10 in the vehicle interior 11R and locks the vehicle door by any means, the lock is forcedly unlocked, so that the occurrence of lockout is prevented.

The outbound on-vehicle radio device 14 is an on-vehicle radio device to which the present invention is applied. In the following, a configuration and operation of the outbound on-vehicle radio device 14 and communication thereof with the portable device 10 will be described in detail.

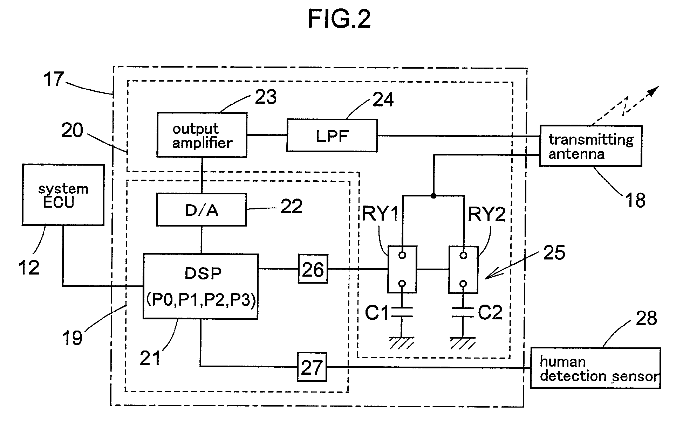

As shown in Figure 1, the transmitting section 14S and the receiving section 14R of the outbound on-vehicle radio device 14 are both incorporated in the door panel 11D. The receiving section 14R has receiving means and demodulation means available for the band of the upstream signal transmitted by the portable device 10 and transfers a baseband signal including the identification information ID obtained by demodulation of the received signal to the system ECU 12. The transmitting section 14S is composed of a transmission driver 17 and a transmitting antenna 18. As shown in Figure 2, the transmission driver 17 is composed of a digital circuit 19 for generating a signal and an analog circuit 20 for transmitting the generated signal to the outer space and is implemented on one printed circuit board (PCB).

The digital circuit 19 has a DSP 21 that generates modulated signals by digital signal processing based on a transmission request code Rq, which is the base band signal, and a D/A converter 22 that converts the temporally discrete modulated signals generated by the DSP 21 into successive analog signals. In addition to the DSP 21 and the D/A converter 22 described above, the digital circuit 19 has a driver IC 26 that drives connection relays RY1 and RY2 of a band selection circuit 25 described later.

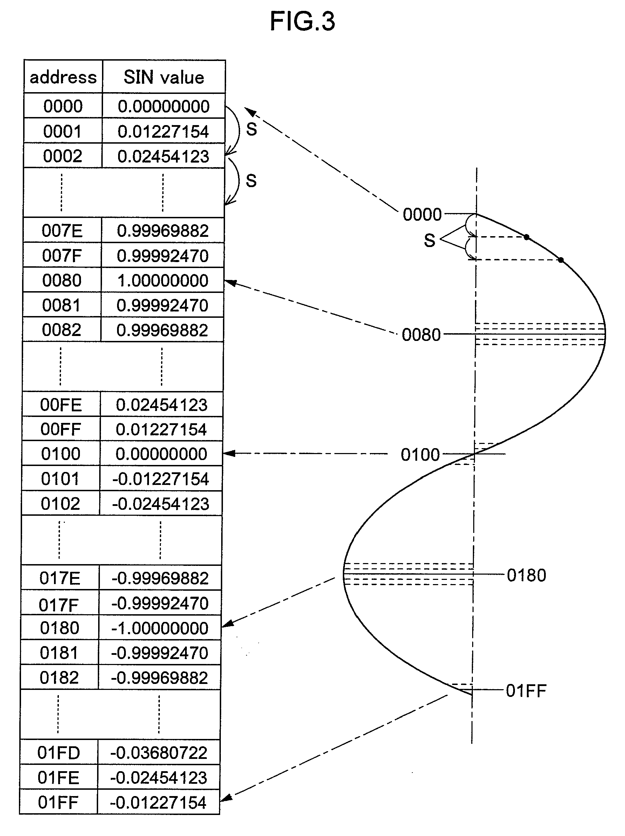

The DSP 21 generates periodic signals by a transmission signal generation processing P1 according to the principle described below. There is prepared a table that contains one cycle of discrete variables of a sine function stored at successive addresses in an on-chip data memory of the DSP 21. Then, discrete periodic signals are obtained by extracting values from the table based on reference address values incremented by a configurable step value S. For example, as shown in Figure 3, discrete values of one cycle of a sine function are stored at 512 successive addresses (an address 0000 to an address 01FF). Then, the sine table is cyclically referred to based on the specified addresses incremented by the step value S =1) each time interruption occurs at intervals of 8 MHz. Then, 8M/ (512/1) = 15.625k sine waves are obtained per one second. In other words, a signal of 15. 625 kHz is obtained.

The sampling frequency of the D/A converter 22, which is a basic operating frequency thereof, is set at a frequency enough to ensure the reproduction of the signal generated in the transmission signal generation processing P1. Since the D/A converter 22 takes in the discrete values output from the DSP 21 at the sampling frequency, a signal of a different frequency can be obtained by changing the step value S. For example, in the example descried above, if the step value S is changed to 2, and the values stored at the addresses 0000 to 01FF are cyclically referred to at intervals of 8 MHz, a signal of 31.25 kHz is obtained. Similarly, if the step value S is 8, a signal of 125 kHz is obtained, and if the step value S is 10, a signal of 156.25 kHz is obtained. In this way, the DSP 21 generates signals of different frequencies by changing the step value S for referring to the sine table in a transmission band changing processing P3 (corresponding to band changing means according to the present invention).

According to this embodiment, the step value S changed in the transmission band changing processing P3 is selectively set at any of S1 and S2. Depending on the step value S, the DSP 21 generates a modulated wave having a carrier frequency of f1 or f2. For example, in the operational environment described in the example described above, if the step value S is S1 (= 8), the DSP 21 generates a modulated wave having a carrier frequency f1 of 125 kHz, and if the step value S is S2 (= 16), the DSP 21 generates a modulated wave having a carrier frequency f2 of 250 kHz.

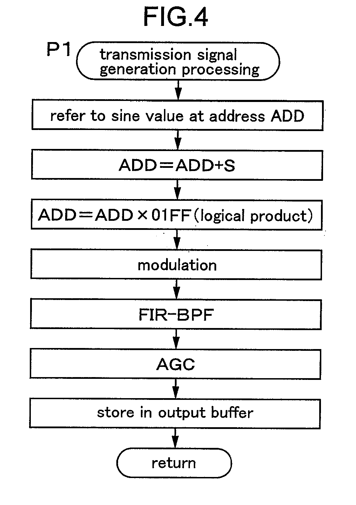

The DSP 21 performs the transmission signal generation processing P1 shown in Figure 4 at the sampling timing to generates amodulatedwave including signals obtained by cyclic reference to the sine table as a carrier wave and a band code Cfn, which is information about the band specified by the system ECU 12, a predetermined code (a code as a transmission request signal to be transmitted to the portable device 10) or the like as a baseband signal. The generated modulated wave is stored in an output buffer after an unwanted band of the generated modulated wave is cut by a digital filter (FIR filter) processing, and the output value thereof is adjusted by automatic gain control (AGC) or the like. Once the output data of the modulated signal is stored in the output buffer, the transmission signal generation processing P1 is completed, and a wait state is entered and kept until the next sampling timing.

The D/A converter 22 takes in the data from the transmission buffer of the DSP 21 at the sampling timing, converts the discrete signals generated by the DSP 21 into successive analog signals and outputs the analog signals to radio transmitting means described later. The transmission signal generation processing P1 performed by the DSP 21 and the D/A converter 22 provide variable frequency signal generating means. If the carrier frequency fn is changed in the transmission band changing processing P3, the frequency band Bm (fn) of the modulated signal generated by the variable frequency signal generating means is changed.

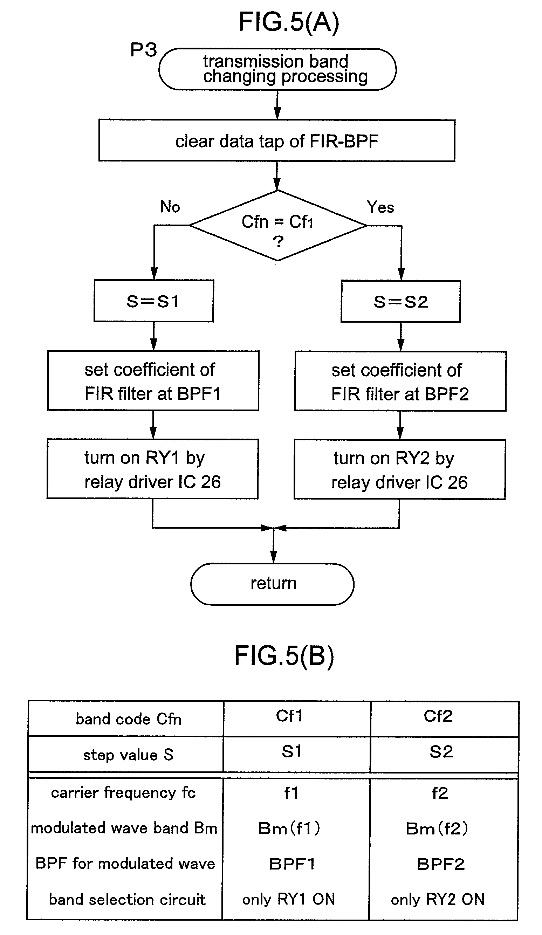

In the transmission band changing processing P3 performed by the DSP 21, as shown in Figure 5 (A), the data tap processed by the FIR digital filter used in the transmission signal generation processing P1 is reset to an initial value 0. In addition, the setting of the step value S corresponding to the band code Cfn is changed. In addition, the coefficient of the FIR digital filer is changed to provide a filter designed for a band Bm (f1) or Bm (f2) of the modulated wave (the filters designed for the bands Bm (f1) and Bm (f2) are referred to as BPF1 and BPF2, respectively). In addition, the setting of the band selection circuit 25 is switched. Figure 5(B) shows values of the band code Cfn and values of various parameters associated therewith.

As shown in Figure 2, the analog circuit 20 has an output amplifier 23 that amplifies the output signal of the D/A converter 22, a low-pass filter 24 that removes a high-frequency noise component of the signal having passed through the output amplifier 23, and the band selection circuit 25 that is connected to the transmitting antenna 18 and determines the output band of the transmitting antenna 18, for example. The transmitting antenna 18 is connected to the output terminal of the analog circuit 20, and the transmitting antenna 18 and the analog circuit 20 constitute radio transmitting means that transmits the output of the D/A converter 22 to the outer space in the form of a radio wave.

The band selection circuit 25 is composed of resonant capacitors C1 and C2 having different capacitances, and connection relays RY1 and RY2 that switchably connect the resonant capacitors to the transmitting antenna 18. The DSP 21 generates a modulated wave having a carrier frequency (fc) f1 or f2 depending on the step value S set by the transmission band changing processing P3. The band selection circuit 25 changes the transmission characteristics of the transmitting means so that the modulated wave can be transmitted to the outer space. The band selection circuit 25 is switched by a control signal that is output from an external output port of the DSP 21 to the driver IC 26 in the transmission band changing processing P3. The transmission band changing processing P3 that switches the setting of the band selection circuit 25 and the band selection circuit 25 provide transmission characteristics changing means.

A human detection sensor 28 is connected to the digital circuit 19. The human detection sensor 28 is incorporated in an outside handle part of the door panel 11D and is capacitance-type human detection means that outputs a detection signal when a user puts a hand on the outside handle. If the human detection sensor 28 detects a person, the detection signal is input to an interruption signal port of the DSP 21 via a buffer IC 27, and the DSP 21 performs the transmission band changing processing P3 shown in Figure 5 (A) . Thus, the frequency band of the transmission signal transmitted from the transmitting section 14S of the outbound on-vehicle radio device 14 to the outer space is changed from Bm (f1) to Bm (f2) or from Bm (f2) to Bm (f1).

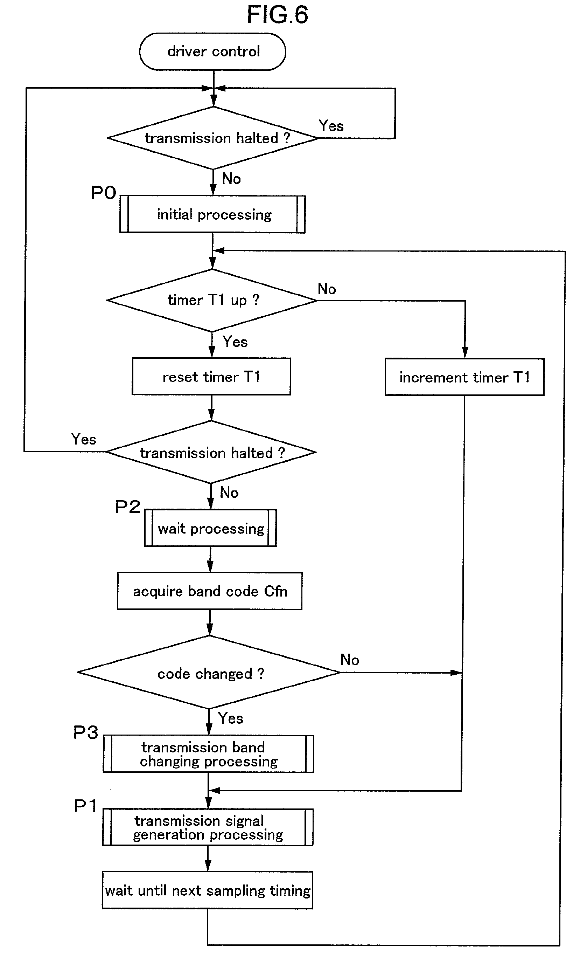

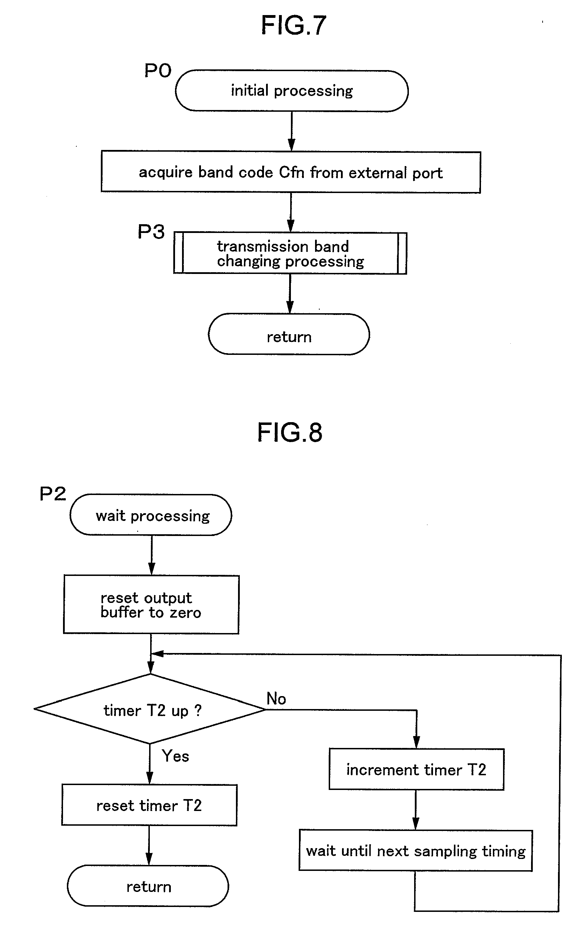

Figure 6 is a flowchart for illustrating a program executed in the DSP 21. The control signal from the system ECU 12 is input to an external port of the DSP 21. Once the system ECU 12 completes the authentication of the identification information ID of the portable device 10, the DSP 21 enters a halt state in accordance with a halt instruction from the system ECU 12. If the DSP 21 is released from the halt state in accordance with a control instruction from the system ECU 12, an initial processing P0 is performed, and as shown in Figure 7, the band code Cfn is initialized at a band specified by the system ECU 12, and the transmission band Bm of the transmission request signal transmitted by the transmitting section 14S is initialized at Bm (fn). Then, the transmission signal generation processing P1 is performed, and a transmission request signal within the set band Bm (fn) is generated and transmitted. After a lapse of a predetermined length of time (T1), a wait processing P2 shown in Figure 8 is performed, and the DSP 21 enters a transmission wait state. After a lapse of a predetermined length of time (T2) in the transmission wait state, the DSP 21 checks the external port to acquire the band code Cfn specified by the system ECU 12 and generates and transmits a transmission request signal within the specified band. The band code Cfn is overwritten (updated) by interruption by a detection signal of a human detection sensor described later. The external port is checked when the DSP 21 enters the transmission wait state, and if the halt instruction is issued from the system ECU 12 at that time, the DSP 21 enters the transmission halt state.

The portable device 10 shown in Figure 1 receives the transmission request signal transmitted by the outbound on-vehicle radio device 14 mounted on the vehicle 11 and transmits the response signal including the identification information ID. The portable device 10 incorporates a transmitting system 10S, a receiving system 10R and a signal processing CPU 10C. The transmission request signal is transmitted by the outbound on-vehicle radio device 14 within a band Bm (f1) or band Bm (f2). Thus, in order that the receiving system 10R can receive the transmission request signal within any band, the reception band of the receiving system 10R is switched at predetermined time intervals. A procedure of communication between the portable device 10 and the outbound on-vehicle radio device 14 is as described below.

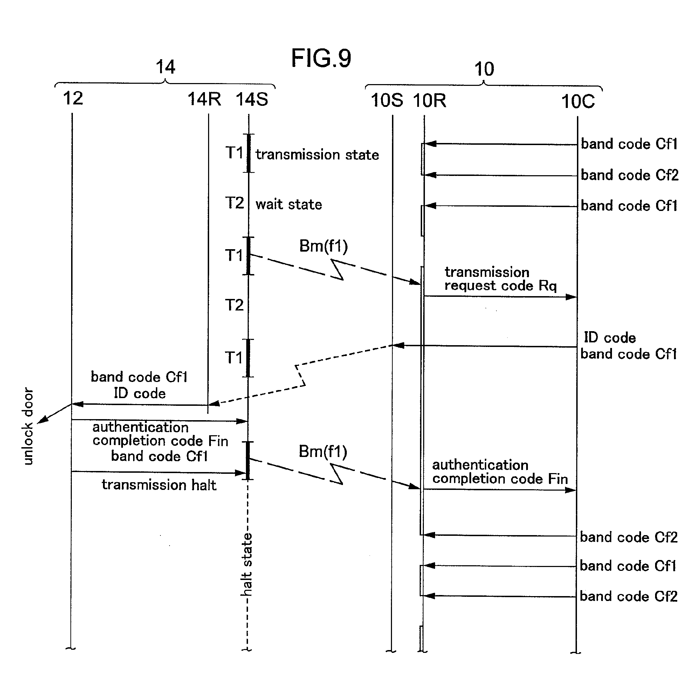

Figure 9 is a schematic diagram showing a procedure of communication between the outbound on-vehicle radio device 14 and the portable device 10. When the portable device 10 is in a reception wait state, the signal processing CPU 10C transfers the band code Cfn to the receiving system 10R at predetermined time intervals to switch the reception band of the receiving system 10R in operation. The receiving system 10R receives a signal having a band Bm (fn) (as an example, Figure 9 shows a band Bm (f1), which is a frequency band of a modulated wave having a carrier frequency fn = f1, the same holding true for the following description), demodulate the signal, and transfers the transmission request code Rq and the successfully received band code Cfn of the band Bm (fn) to the signal processing CPU 10C. Once the signal processing CPU 10C obtains the band code Cfn in this way, the signal processing CPU 10C repeatedly transfers the band code Cfn of the band Bm (fn), for which the downstream reception is established, to the receiving system 10R (not shown in Figure 9). Therefore, the reception band of the receiving system 10R is held at the band Bm (fn). Once the signal processing CPU 10C recognizes the transmission request code Rq, the ID code, as the identification information ID, recorded in the signal processing CPU 10C is transferred to the transmitting system 10S along with the band code Cfn. Then, the transmitting system 10S performs modulation to produce a response signal and transmits the response signal.

The response signal transmitted by the portable device 10 is received and demodulated by the receiving section 14R of the outbound on-vehicle radio device 14. The ID code and the band code Cfn obtained as a result of the demodulation are transferred to the system ECU 12. The ID code is checked against the preset reference code, and if the codes matches with each other, an authentication completion code Fin is transferred to the transmitting section 14S along with the band code Cfn. In response to this, the transmitting section 14S transmits an authentication completion signal within the band Bm (fn) specified by the band code Cfn. At this time, the reception band of the receiving system 10R of the portable device 10 is the immediately preceding band Bm (fn) in which the reception is established, so that the probability that the communication fails is low. The received authentication completion signal is demodulated and transferred to the signal processing CPU 10C, and then, the signal processing CPU 10C recovers to the reception wait state. Then, the signal processing CPU 10C transfers the band code Cfn to the receiving system 10R at predetermined time intervals to switch the reception band of the receiving system 10R in operation, so that the reception band of the receiving system 10R having been held is released. Besides, in the case where a predetermined length of time elapses with the reception band of the receiving system 10R being held, the reception band having been held is released. Once transmitting the authentication completion signal, the transmitting system 14S enters the transmission halt state in accordance with a halt instruction from the system ECU 12.

With the configuration according to this embodiment, even if communication between the transmitting section 14S and the portable device 10 within a frequency band Bm (f1) is not completed because of an effect of the radio wave environment, when the user puts a hand on the outside handle to open the door, the communication is established again within a frequency band Bm (f2) with a different radio wave environment. Thus, the probability of success in communication between the portable device 10 and the transmitting section 14S increases, and the probability that the user with the portable device 10 cannot open the door is reduced. Thus, a highly reliable smart system is provided.

### (Another Embodiment of Invention)

According to another embodiment, the outbound on-vehicle radio device 14 may be configured so that the transmission frequency band Bm of the transmission request signal transmitted by the outbound on-vehicle radio device 14 is set at a band the radio wave intensity in the vicinity of which is relatively low. In the following, the outbound on-vehicle radio device 14 capable of transmitting signals within m bands from Bm (f1) to Bm (fm) and radio wave measuring means that measures radio waves in these bands as detection target bands Bn will be described.

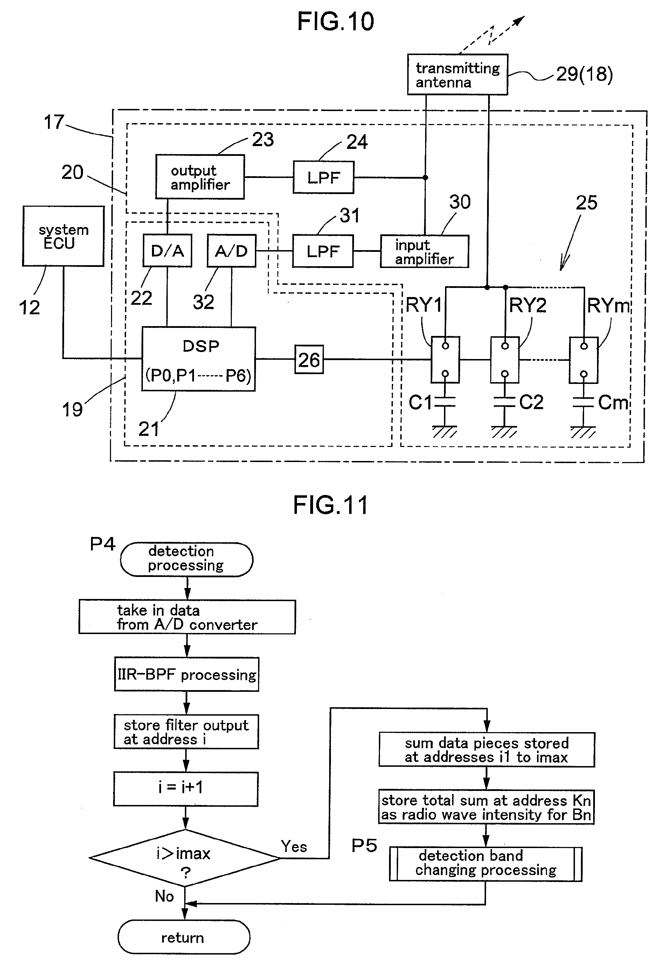

As with the transmission driver 17 according to the embodiment described above, a transmission driver 17 shown in Figure 10 is composed of a digital circuit 19 and an analog circuit 20. The digital circuit 19 has a DSP 21, a D/A converter 22 and an A/D converter 32. The analog circuit 20 has a transmitting output amplifier 23, a low pass filter 24, a receiving input amplifier 30, a low pass filter 31, and a band selection circuit 25 that changes the transmission characteristics of a transmitting antenna 18 and the reception characteristics of a receiving antenna 29 under the control of the DSP 21.

One antenna component doubles as the receiving antenna 29 and the transmitting antenna 18. Therefore, when the transmitting section 14S is transmitting the transmission request signal, the receiving function does not work. The received external radio wave signal is input to the A/D converter 32 via the input amplifier 30 and the low pass filter 31, A/D-converted at the sampling timing for the transmission signal generation in the transmitting section 14S, and subjected to a detection processing P4 by the DSP 21. In the wait processing P2 shown in Figure 8, the detection processing P4 is performed after a timer T2 is incremented and before the next sampling timing. The band changing processing P3 shown in Figure 5 (A) is designed to handle m bands. That is, various parameters are set for band codes Cfn (n = 1 to m) .

Specifically, under restrictions on the bandwidth of the modulated signal, the length of the transmitting antenna 18, the permitted processing time of the detection processing P4 and the like, four transmission bands Bm (f1) to Bm (f4) are used as the transmission bands Bm (fn) of the transmission section 14S. Accordingly, four resonant capacitors C1 to C4 are provided in the band selection circuit 25 in such a manner that the capacitors can be selectively connected to each other, thereby providing four detection target bands (Bn) B1 to B4. That is, the detection target bands Bn are frequency bands Bm (f1) to Bm (f4) of modulated waves having carrier frequencies f1 to f4 of 31.25 kHz in the case of the step value S = 2, 62.5 kHz in the case of the step value S = 4, 125 kHz in the case of the step value S = 8, and 250 kHz in the case of the step value S = 16.

Figure 11 shows a flow of the detection processing P4 performed in the DSP 21. The external radio wave signal A/D-converted by the A/D converter 32 is taken in and is passed through a band pass filter corresponding to the detection target band Bn. In order to reduce the processing time per detection target band Bn, an IIR filter having a relatively small number of taps is used as the band pass filter. Thus, the upper limit of the number of detection bands m, which depends on the processing time of the DSP 21, is raised. The outputs of the IIR filter, which are produced at the operating frequency of the DSP 21, are successively stored at a series of addresses in a data memory beginning with a leading address i1. If a predetermined number of filter outputs are obtained for one detection target band Bn, the pieces of data stored at the addresses i1 to imax are summed, and the total sum is stored at an address Kn as the external radio wave intensity for the detection target band Bn. Then, to measure the radio wave of the next detection target band, a detection band changing processing P5 is performed.

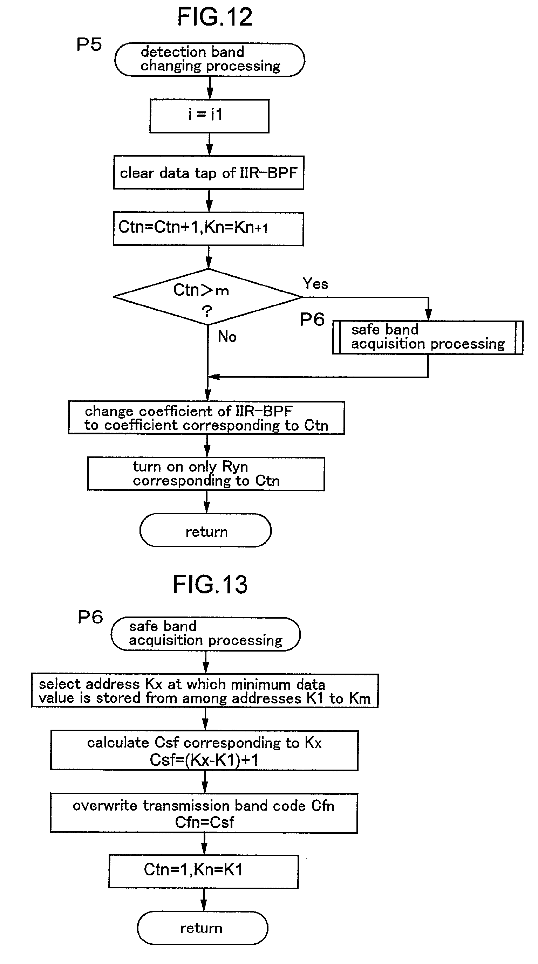

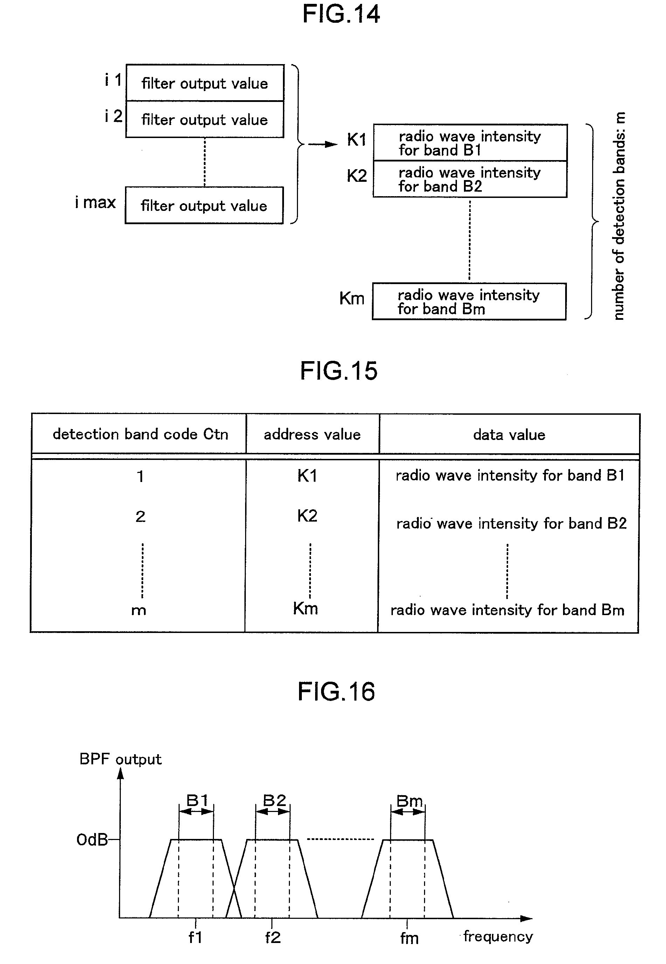

In the detection band changing processing P5 shown in Figure 12, the address to store the output of the band pass filter for the radio wave intensity data for the updated detection target band Bn is set at the initial value i1. Then, the data tap of the band pass filter is reset to zero, and the detection band code Ctn and the radio wave intensity storage address Kn are incremented. If the detection band code Ctn incremented exceeds the value m, it means that measurement of the radio wave intensity for m bands B1 to Bm is completed. Thus, a safe band acquisition processing P6 for selecting a safe band from m bands is performed. If the value of the detection band code Ctn is less than m, the safe band acquisition processing P6 is not performed. The coefficient of the band pass filter is changed to the coefficient of the IIR filter corresponding to the incremented detection band code Ctn, only the connection relay RYn corresponding to the incremented detection band code Ctn is turned on, and then, the detection band changing processing P5 is ended. Figure 16 shows how the pass band of the IIR filter changes as the detection target band Bn changes.

In the safe band acquisition processing P6 shown in Figure 13, an address Kx at which the minimum data value is stored is selected from among addresses K1 to Km in the data memory at which the radio wave intensities for the m bands B1 to Bm are stored. And the safe band code Csf corresponding to the address Kx is calculated in accordance with a formula: Csf = (Kx - K1) + 1. Then, the band code Cfn which is referred to when the transmitting section 14S generates a transmission modulated wave is overwritten with the safe band code thus acquired. Then, the detection band code Ctn and the address Kn for storing the radio wave intensity are recovered to their respective initial values Ctn = 1 and Kn = K1, and the safe band acquisition processing P6 is ended.

Figure 14 is a diagram showing a data arrangement of external radio wave measurement values and a storage condition thereof in the detection processing P4. Figure 15 shows a data arrangement of detection band code values Ctn and radio wave intensity values for detection target bands Bn corresponding to the detection band code values in the detection band changing processing P5.

By the process described above, external radio waves of m bands B1 to Bm are measured when the transmitting section 14S is in the transmission wait state. Then, the band for which the measurement value is at the lowest level (in the case where m = 2, one of the bands B1 and B2 for which the lower radio wave intensity is measured) is selected as the safe band Bx, and the band code Cfn is set at the band code Cfs for the safe band Bx. Thus, the transmitting section 14S transmits the transmission request signal and the authentication completion signal within the safe band Bx that is less affected by the external radio wave. As a result, the outbound on-vehicle radio device 14 and the portable device 10 can communicate with each other with higher reliability.

Other embodiments of the present invention will be listed in the following.
(1) For the modulation in the transmission signal generation processing P1 performed by the DSP 21 in the transmission section 14S, various types of modulation may be used, such as amplitude modulation (AM), frequency modulation (FM) and phase modulation (PM). In this case, the corresponding type of demodulation is used in the portable device 10.
(2) The band selection circuit 25 may change the transmission characteristics of the transmitting antenna 18 (receiving antenna 29) by changing the magnitude of the reverse voltage applied to a variable capacitance diode.
(3) The two embodiments described above may be combined with each other. That is, when changing the transmission frequency band by detecting a person with the human detection means, the transmission frequency band may be changed to a band the radio wave intensity previously measured by the radio wave measuring means in the vicinity of which is the lowest.
(4) The transmission wait time T2 of the transmitting section 14S may be shortened to increase the frequency of transmission of the transmission request signal. In this case, the reliability of the communication between the outbound on-vehicle radio device 14 and the portable device 10 is further improved.
(5) The variable frequency signal generating means may be constituted by an analog circuit composed of an oscillation circuit, a frequency divider circuit, a modulation circuit and a frequency selection circuit that changes the frequency dividing ratio of the frequency divider circuit, rather than constituted by the DSP 21 and the D/A converter 22.
(6) Instead of the detection processing P4 performed by the DSP 21, a detection circuit and a frequency selection circuit that selects the frequency band based on the output of the detection circuit may be constituted by analog circuits.

### Industrial Applicability

The present invention can be applied to a so-called smart system that establishes radio communication between a vehicle and a portable radio device having identification information for unlocking the lock device of the vehicle recorded therein, thereby unlocking the vehicle without the need of an unlocking manipulation by the user. In addition, the present invention can be applied to an access control system that authenticates the IC card or the like of a person to permit the person to enter a building or room.

### Brief Description of the Drawings

Figure 1 is a block diagram showing a configuration of a smart system;
Figure 2 is a block diagram showing a configuration of a transmission driver;
Figure 3 is a diagram for illustrating a principle of signal generation by variable frequency signal generating means;
Figure 4 is a flowchart illustrating a transmission signal generation processing;
Figure 5(A) is a flowchart illustrating a transmission band changing processing;
Figure 5 (B) is a correspondence table showing band codes for frequency bands and various parameter values;
Figure 6 is a flowchart illustrating a driver control processing performed by a DSP;
Figure 7 is a flowchart illustrating an initial processing;
Figure 8 is a flowchart illustrating a wait processing;
Figure 9 is a diagram showing an exemplary procedure of communication between an outbound on-vehicle radio device and a portable device;
Figure 10 is a block diagram showing a configuration of a transmission driver according to another embodiment;
Figure 11 is a flowchart illustrating a detection processing;
Figure 12 is a flowchart illustrating a detection band changing processing;
Figure 13 is a flowchart illustrating a safe band acquisition processing;
Figure 14 is a diagram showing a storage condition of output values of a band pass filter on a detection-target-band basis;
Figure 15 shows a correspondence between detection band codes and external radio wave intensities and a condition of storage of the external radio wave intensities in a data memory; and
Figure 16 is a diagram showing a change of the pass band of a band pass filter during the detection processing.

### Explanations of letters or numerals

- P1, 22, 22: variable frequency signal generating means
- P3: band changing means
- P4, 29, 30, 31, 32: radio wave measuring means
- Bm(fn): frequency band
- ID: identification information
- 10: portable radio device
- 11: vehicle
- 14: on-vehicle radio device
- 16: lock device
- 18, 20: radio transmitting means
- 25: transmission characteristics changing means
- 28: human detection means

## Claims

1. An on-vehicle radio device that acquires identification information for unlocking a lock device of a vehicle from a portable radio device having said identification information recorded therein by radio communication with said portable radio device, comprising:
variable frequency signal generating means;
band changing means of changing the frequency band of a signal generated by said variable frequency signal generating means;
radio transmitting means of transmitting the signal generated by said variable frequency signal generating means to the outer space; and
transmission characteristics changing means of changing the transmission characteristics of said radio transmitting means to transmission characteristics adapted to the frequency band of the signal generated by said variable frequency signal generating means changed by said band changing means.

2. The on-vehicle radio device according to claim 1, wherein the frequency band of a signal transmitted from said portable radio device to said on-vehicle radio device is set higher than the frequency of the signal transmitted from said on-vehicle radio device to said portable radio device.

3. The on-vehicle radio device according to claim 1, wherein said variable frequency signal generating means generates the signal to be transmitted to said portable radio device based on discrete variable values of a sine function stored in a table.

4. The on-vehicle radio device according to claim 1, wherein said variable frequency signal generating means generates a carrier wave based on discrete variable values of a sine function stored in a table and modulates a predetermined code with the carrier wave, thereby generating the signal to be transmitted to said portable radio device.

5. The on-vehicle radio device according to claim 1, wherein said band changing means has a digital filter that removes a frequency band that is not necessary for transmission to said portable radio device based on a predetermined coefficient and changes said coefficient in accordance with the changed frequency band of the signal generated by said variable frequency signal generating means.

6. The on-vehicle radio device according to claim 1, further comprising:
human detection means of detecting a person,
wherein said band changing means changes the frequency band of the signal generated by said variable frequency signal generating means in accordance with a detection signal of said human detection means, and
said transmission characteristics changing means changes, in accordance with the detection signal of said human detection means, the transmission characteristics of said radio transmitting means to transmission characteristics adapted to the frequency band of the signal generated by said variable frequency signal generating means changed by said band changing means.

7. The on-vehicle radio device according to claim 6, wherein said band changing means is activated when said human detection means detects a person.

8. The on-vehicle radio device according to claim 1, further comprising:
radio wave measuring means of measuring radio wave intensity in the outer space of said on-vehicle radio device for each of predetermined frequency bands,
wherein said band changing means changes the frequency band of the signal generated by said variable frequency signal generating means to one of the frequency bands for which said radio wave measuring means measures the lowest radio wave intensity, and
said transmission characteristics changingmeans changes the transmission characteristics of said radio transmitting means to transmission characteristics adapted to the frequency band of the signal generated by said variable frequency signal generating means changed by said band changing means.

9. The on-vehicle radio device according to claim 8, wherein said radio measuring means measures radio wave intensity when said on-vehicle radio device is in a transmission wait state.

## Amended claims

### Amended claims under Art. 19.1 PCT

1. An on-vehicle radio device that acquires identification information for unlocking a lock device of a vehicle from a portable radio device having said identification information recorded therein by radio communication with said portable radio device, comprising:
human detection means of detecting a person;
variable frequency signal generating means;
band changing means of changing the frequency band of a signal generated by said variable frequency signal generating means in accordance with a detection signal of said human detection means;
radio transmitting means of transmitting the signal generated by said variable frequency signal generating means to the outer space; and
transmission characteristics changing means of changing the transmission characteristics of said radio transmitting means to transmission characteristics adapted to the frequency band of the signal generated by said variable frequency signal generating means changed by said band changing means.

2. An on-vehicle radio device that acquires identification information for unlocking a lock device of a vehicle from a portable radio device having said identification information recorded therein by radio communication with said portable radio device, comprising:
radio wave measuring means of measuring radio wave intensity in the outer space of said on-vehicle radio device for each of predetermined frequency bands;
variable frequency signal generating means;
band changing means of changing the frequency band of a signal generated by said variable frequency signal generating means to one of the frequency bands for which said radio wave measuring means measures the lowest radio wave intensity;
radio transmitting means of transmitting the signal generated by said variable frequency signal generating means to the outer space; and
transmission characteristics changing means of changing the transmission characteristics of said radio transmitting means to transmission characteristics adapted to the frequency band of the signal generated by said variable frequency signal generating means changed by said band changing means.

3. The on-vehicle radio device according to claim 1, wherein said band changing means is activated when said human detection means detects a person.

4. The on-vehicle radio device according to claim 2, wherein said radio measuring means measures radio wave intensity when said on-vehicle radio device is in a transmission wait state.

5. The on-vehicle radio device according to claim 1 or 3, wherein the frequency band of a signal transmitted from said portable radio device to said on-vehicle radio device is set higher than the frequency of the signal transmitted from said on-vehicle radio device to said portable radio device.

6. The on-vehicle radio device according to claim 1 or 3, wherein said variable frequency signal generating means generates the signal to be transmitted to said portable radio device based on discrete variable values of a sine function stored in a table.

7. The on-vehicle radio device according to claim 1 or 3, wherein said variable frequency signal generating means generates a carrier wave based on discrete variable values of a sine function stored in a table and modulates a predetermined code with the carrier wave, thereby generating the signal to be transmitted to said portable radio device.

8. The on-vehicle radio device according to claim 1 or 3, wherein said band changing means has a digital filter that removes a frequency band that is not necessary for transmission to said portable radio device based on a predetermined coefficient and changes said coefficient in accordance with the changed frequency band of the signal generated by said variable frequency signal generating means.

9. The on-vehicle radio device according to claim 2 or 4, wherein the frequency band of a signal transmitted from said portable radio device to said on-vehicle radio device is set higher than the frequency of the signal transmitted from said on-vehicle radio device to said portable radio device.

10. The on-vehicle radio device according to claim 2 or 4, wherein said variable frequency signal generating means generates the signal to be transmitted to said portable radio device based on discrete variable values of a sine function stored in a table.

11. The on-vehicle radio device according to claim 2 or 4, wherein said variable frequency signal generating means generates a carrier wave based on discrete variable values of a sine function stored in a table and modulates a predetermined code with the carrier wave, thereby generating the signal to be transmitted to said portable radio device.

12. The on-vehicle radio device according to claim 2 or 4, wherein said band changing means has a digital filter that removes a frequency band that is not necessary for transmission to said portable radio device based on a predetermined coefficient and changes said coefficient in accordance with the changed frequency band of the signal generated by said variable frequency signal generating means.
